Europäisches Patentamt

European Patent Office

Office européen des brevets

(11) Publication number: **0 337 021**
**A1**

(12) **EUROPEAN PATENT APPLICATION**

(21) Application number: **88303279.9**

(22) Date of filing: **12.04.88**

(51) Int. Cl.⁴: **H05B 41/04 , H05B 41/392**

(43) Date of publication of application:
**18.10.89 Bulletin 89/42**

(84) Designated Contracting States:
**AT BE CH DE ES FR GB GR IT LI LU NL SE**

(71) Applicant: **ACTRONIC LIGHTING CC**
**3 Mpande Road Sebenza**
**Edenvale Transvaal(ZA)**

(72) Inventor: **Cockram, David John**
**24 Dante Road Rembrandt Park**
**Johannesburg Transvaal(ZA)**
Inventor: **Cockram, Edgar Stanley Richard**
**24 Dante Road Rembrandt Park**
**Johannesburg Transvaal(ZA)**

(74) Representative: **Gordon, Michael Vincent et al**
**GILL JENNINGS & EVERY 53-64 Chancery Lane**
**London WC2A 1HN(GB)**

(54) Ignition device for a gas discharge lamp.

(57) The invention provides an ignition device 10 for a gas discharge lamp 12. The device 10 comprises a voltage multiplier 18 which is connected to an AC mains source. A pulse generator 22 is connected to the voltage multiplier 18 via a voltage detector and regulator 20 and produces periodic trigger pulses when the source voltage exceeds a predetermined threshold. The output of the pulse generator 22 is applied to a resonant network 24 including a step-up transformer, which applies high voltage ignition pulses to the lamp 12. The ignition pulses have a high frequency relative to the mains frequency.

FIG. 1

## IGNITION DEVICE FOR A GAS DISCHARGE LAMP

This invention relates to an ignition device for a gas discharge lamp.

Gas discharge lamps are usually driven by a source of alternating electrical current and are controlled by means of a regulating device such as an inductive choke, which controls the lamp voltage and current, together with an ignition device to provide high voltage pulses which initiate the discharge arc in the lamp. The ignition device must only operate until the lamp ignites and must then be disabled. Such ignition devices can be controlled by manual switches, timers or voltage detection circuits.

The ignition pulse voltage which is required to ignite the lamp may be in the region of 20 to 65kV. Because of the large step up ratios required to obtain such voltages from a standard AC mains voltage, step-up transformers which are used in typical ignitors tend to be bulky and costly. To reduce the cost of such transformers, they are usually short-time rated to allow small frame sizes to be utilised, and multiple stages may be used to overcome insulation breakdown problems which may otherwise occur due the high voltages involved. Due to the higher voltages necessary for re-ignition of a hot lamp (say, three or four times the cold ignition voltage), and the difficulty of achieving these voltages from normal mains supplies, hot lamp re-ignition is often not provided on commercially available ignition devices.

Certain ignition devices incorporate spark-gap oscillators which operate at high voltages and which are sensitive to changes in humidity and atmospheric pressure. Such devices may wear or need adjustment, which is a disadvantage.

### SUMMARY OF THE INVENTION

According to the invention there is provided an ignition device for a gas discharge lamp which is driven by a source of electrical current, the device comprising a voltage multiplier which is adapted to be connected to the source and to provide an output having a higher voltage than that of the source; a pulse generator adapted to be driven by the output and to produce periodic trigger pulses; means for sensing the voltage of the source, for feeding the output of the voltage multiplier to the pulse generator when the voltage of the source exceeds a predetermined level and for disconnecting the pulse generator from the output when the voltage of the source drops below a predetermined level; and a resonant network having a primary winding to which the trigger pulses of the pulse generator are applied and a secondary winding which is in circuit with the lamp and which applies high-voltage ignition pulses to the lamp when the trigger pulses are applied to the primary winding, the ignition device thereby providing ignition pulses to the lamp automatically whenever the voltage of the source increases beyond the predetermined level.

### BRIEF DESCRIPTION OF THE DRAWINGS

Figure 1 is a block schematic diagram of an ignition device for a gas discharge lamp according to the invention; and

Figure 2 is a schematic circuit of the ignition device of Figure 1.

### DESCRIPTION OF A PREFERRED EMBODIMENT

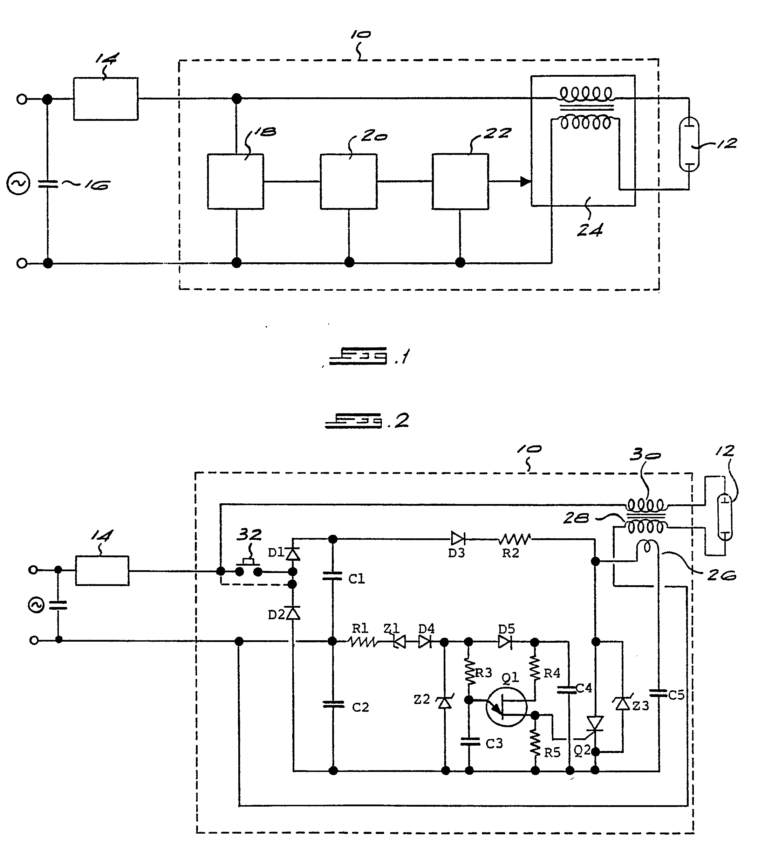

Figure 1 shows the ignition device in simplified block diagram form. An ignition device 10 is interposed between a gas discharge lamp 12 and a conventional voltage/current regulating device 14, which may be an inductive choke or another regulating device. The entire circuit is connected to an AC electrical current source. A parallel capacitor 16 provides power factor correction.

The ignition device 10 comprises four basic circuit blocks, a voltage multiplier 18, a voltage detector and regulator 20, an oscillator/trigger circuit 22 and a resonant network 24. Basically, the ignition device operates as follows. When the lamp 12 is off and the circuit is connected to the mains electrical supply, the mains voltage appears at the input to the ignition device 10. The mains voltage is multiplied by a predetermined factor in the voltage multiplier 18. The mains voltage (or the increased output voltage of the voltage multiplier 18, which is directly related to the mains voltage) is applied to the voltage detector/ regulator 20, which in either case effectively senses the mains voltage and provides a regulated supply derived from the increased output voltage to the oscillator/ trigger circuit 22 when the mains voltage exceeds a predetermined level. When the regulated supply is provided to the oscillator/ trigger circuit 22, the oscillator starts up automatically and trigger pulses are provided to the resonant network 24. The network 24 includes a superimposing transformer which steps up the trigger pulses and applies high voltage pulses to the lamp 12 to cause ignition.

When ignition is achieved, the lamp load causes the voltage at the input of the ignition device 10 to drop, which causes the output of the voltage multiplier 18 to fall below the predetermined threshold level of the voltage detector/ regulator 20. The voltage detector/ regulator 20 removes the regulated supply to the oscillator/ trigger 22 and the ignition pulses cease.

The ignition device 10 will now be described in greater detail, with reference to Figure 2. The voltage multiplier 18 comprises a diode/capacitor voltage multiplier which includes two diodes D1 and D2, and two capacitors C1 and C2, and doubles the AC mains voltage which is applied to the input of the ignition device 10 via a "START" switch 32. The voltage detector/regulator 20 comprises a resistor R1, a series zener diode Z1, a diode D4, and a parallel zener diode Z2. The detector/regulator 20 is connected to the centre of the voltage divider formed by the two capacitors C1 and C2, and effectively senses the applied main voltage. When this voltage exceeds a predetermined level determined by the zener diode Z1, this zener diode conducts and a rectified and regulated supply is provided to the oscillator/trigger circuit 22 via the diode D4 and the zener diode Z2.

The oscillator/trigger circuit 22 comprises three resistors R3, R4 and R5, a diode D5, two capacitors C3 and C4, and a unijunction transistor Q1. When the regulated supply is provided to the oscillator/trigger circuit 22, the oscillator starts automatically and runs at a frequency which is in the region of or somewhat higher than the mains frequency. In the prototype, the oscillator runs at a frequency of 150 -200 Hz. The oscillator output is supplied to the gate of an SCR Q2 which, together with a diode D3, a resistor R2 and a zener diode Z3 comprise a trigger circuit. The output of the voltage multiplier circuit 18 is applied across the SCR Q2 via the diode D3 and the resistor R2. The zener diode Z3 protects the SCR Q2 against high voltage transients.

The resonant network 24 comprises a step-up transformer having a single-turn primary winding 26 and dual secondary windings 28 and 30 with 25 turns each, and a capacitor C5. The SCR Q2 is turned on and off at the oscillator frequency, alternatively discharging the capacitor C5 via the primary winding 26 and the SCR Q2, and charging the capacitor C5 via the diode D3, the resistor R2 and the primary winding 26. The .primary winding 26 has an effective inductance which includes the inductance of the primary winding and the reflected inductances of the secondary windings 28 and 30. The alternate charging and discharging of the capacitor C5 through the primary winding 26 induces high voltage ignition pulses in the secondary windings 28 and 30 which are applied to the lamp 12 to initiate ignition.

The resonant network is configured to have a resonant frequency which is high relative to the AC mains frequency. The charging and discharging of the capacitor C5 (at the oscillator frequency) thus causes the ignition pulses to be supplied intermittently to the lamp at the resonant frequency of the resonant circuit. It has been found that the use of frequencies in the range 2 to 5 MHz provides good results. However, the use of frequencies of 100kHz and lower is possible, and the use of frequencies of 1 GHz and higher is possible. With lower frequencies, the size of the step-up transformer (described below) tends to increase, while the use of higher frequencies is limited by circuit topology problems.

As soon as the lamp 12 ignites, it draws current form the electrical supply and the voltage at the output side of the regulating device 14, that is, the voltage at the input of the ignition device 10 drops. The value of the zener diode Z1 is chosen so that it ceases to conduct when this occurs, depriving the oscillator/trigger circuit 22 of its regulated supply, and thus removing the trigger pulses to the resonant circuit 24.

Due to the high resonant frequency of the resonant network, the size of the superimposing transformer can be greatly reduced. Using a 250 volt AC mains supply and a voltage multiplier ratio of 2:1, a 25:1 turns ratio of the described transformer provides a 25kV pulse output. The voltage multiplier ratio can, of course, be altered to suit various applications. Similarly, the turns ratio of the superimposing transformer can be varied as required. Because the switching of current through the resonant network 24 creates a relatively high voltage trigger pulse, the turns ratio of the superimposing transformer is reduced, reducing the size of the transformer and its cost, and simplifying installation problems. Together with the low turns ratio, the use of high frequency ignition pulses enables a superimposing transformer to be used which is typically 25% of the size of presently used transformers. It is consequently made easier to provide a continuously rated ignition device, whereas devices presently in use are typically rated for five minutes or less.

Although the described circuit is fully automatic in operation it may be desirable to provide a manual ignition facility. In the illustrated embodiment, a push button switch 32 is provided at the input of the ignition device. This allows manual operation of the ignition device, when the push button 32 is depressed. It will be appreciated that if the switch 32 is replaced by a link, the ignition device will operate fully automatically.

## Claims

1. An ignition device for a gas discharge lamp which is driven by a source of electrical current, the device being characterised in that it comprises a voltage multiplier which is adapted to be connected to the source and to provide an output having a higher voltage than that of the source; a pulse generator adapted to be driven by the output and to produce periodic trigger pulses; means for sensing the voltage of the source, for feeding the output of the voltage multiplier to the pulse generator when the voltage of the source exceeds a predetermined level and for disconnecting the pulse generator from the output when the voltage of the source drops below a predetermined level; and a resonant network having a primary winding to which the trigger pulses of the pulse generator are applied and a secondary winding which is in circuit with the lamp and which applies high-voltage ignition pulses to the lamp when the trigger pulses are applied to the primary winding, the ignition device thereby providing ignition pulses to the lamp automatically whenever the voltage of the source increases beyond the predetermined level.

2. An ignition device according to claim 1 characterised in that the voltage multiplier is a diode/capacitor voltage multiplier.

3. An ignition device according to claim 1 or 2 characterised in that the source of electrical current is an AC mains source, the pulse generator comprising a self-starting oscillator which runs at a frequency in the region of the AC mains frequency, the ignition pulses applied to the lamp having a frequency which is high relative to the AC mains frequency and which is determined by the resonant frequency of the resonant network.

4. An ignition device according to claim 3 characterised in that the ignition pulses have a frequency between 100 kHz and 1 GHz.

5. An ignition device according to claim 4 characterised in that the ignition pulses have a frequency between 2MHz and 5MHz.

6. An ignition device according to any one of claims 1 to 5 characterised in that the means for sensing the voltage of the source, for feeding the output of the voltage multiplier to the pulse generator and for disconnecting the pulse generator from the output comprises a zener diode in series with the output and the pulse generator.

7. An ignition device according to any one of claims 1 to 6 characterised in that the resonant network includes a capacitor which is arranged to be charged and discharged through the primary winding at the oscillator frequency.

8. An ignition device according to any one of claims 1 to 7 characterised in that the secondary and primary winding of the resonant network have a turns ratio of about 25:1.

9. An ignition device according to any one of claims 1 to 8 characterised in that the secondary winding of the resonant network is a dual winding, the lamp being connected in series between the halves of the dual winding.

**Fig.1**

**Fig.2**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 252 438 (NORKA) <br> * Column 5, line 33 - column 6, line 18; column 7, line 22 - column 7, line 54; figure 1 * <br> --- | 1-9 | H 05 B 41/04 <br> H 05 B 41/392 |
| A | GB-A-2 080 054 (NUARC CO.) <br> * Page 2, line 92 - page 3, line 13; figure 1 * <br> ----- | 1 | |

TECHNICAL FIELDS SEARCHED (Int. Cl.4)

H 05 B

The present search report has been drawn up for all claims

| Place of search | Date of completion of the search | Examiner |
|---|---|---|
| THE HAGUE | 18-11-1988 | SPEISER P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                     
& : member of the same patent family, corresponding document

EPO FORM 1503 03.82 (P0401)